# EUROPEAN PATENT APPLICATION

(11) **EP 3 176 736 A1**
(43) Date of publication of application: **07.06.2017**
(21) Application number: 15197993.7
(22) Date of filing: 04.12.2015
(51) Int. Cl.: G06Q 10/02, G06Q 50/00

(54) **ELECTRONIC SYSTEM AND METHOD FOR TRAVEL PLANNING, BASED ON OBJECT-ORIENTED TECHNOLOGY**

(71) Applicant: Nextop Italia SRL Semplificata, 07100 Sassari (IT)
(72) Inventor: OPPO DEMARCHI, Carlo, 07100 Sassari (IT); MELONI, Michele, 09100 Cagliari (IT)
(74) Representative: Baroni, Matteo

(57) **Abstract**

The present invention provides for a method for travel planning, based on object-oriented technology, performed on an electronic system comprising one or more electronic front-end sides, as clients, at least one electronic backend side, as server, one or more storing databases bidirectionally connected to said backend side, comprising the following steps:
- logging in and accessing the electronic system through said frontend side;
- starting communication between said electronic front end side and backend side;
- performing a validation process and creating at least a new User Generated Content (UGC) at said front end side, sending it to said backend side, and storing it in said storing databases;
- through a content manager module, at said backend side, analyzing said User Generated Content (UGC) and assigning a ranking score to said User Generated Content (UGC), creating an object by associating said User Generated Content (UGC) and said scoring , and additional information of geotagging and category, said additional information coming from said frontend side and/or from said storing databases, storing said object in said storing databases;- through a search manager module, at said backend side, searching a number of said objects in said storing databases based on said ranking score, creating a proposed graphic representation of an itinerary with a sequence of said objects, in a given order according to said ranking score, displaying said proposed graphic representation of an itinerary through said frontend,;
- at said one or more electronic front-end sides selecting objects from said proposed graphic representation of an itinerary , and building up a graphic representation of an itinerary of said travel planning according to the selected objects, and sending it to said backend side.

## Description

### Field of the invention

The present invention relates to an electronic system and method for travel planning, based on object-oriented technology.

In particular the present invention relates to a computerized travel planning system based on an innovative selling platform, accessible through an interactive user interface that enables users to build, quote and book all the services associated with simple or complex itineraries using geotagged user-generated content (UGC). An exemplary computing system has a processor, a memory and a user interface.

### Description of the prior art

Internet has helped revolutionize behaviors and the way consumers search, book and share also travel experiences. It gave voice to both the consumers and the producers but it has mainly put the consumer at the center that now has the power to influence the decisions of others by sharing. There are thousands of key players in the travel industry: aggregators, direct sellers, distributors, planners, providers, transport companies, online or local travel agencies. An itinerary is usually provided for the services booked through such a site accessible by a multitude of devices.

On the other hand there are travelers who plan their trips and their activities as the simple search for a restaurant usually comparing many websites. The lifecycle of an experience can be summarized today as follows: typically customers book services basing their choice on the others' experience (word of mouth, reviews, readings), then book given services, live their own experiences and then in turn share photos, videos, reviews, or other kind of content in general. But everything happens on different sites or different services and devices. According to the state of the art, it is not yet possible to book a service directly starting directly from the experience shared by users with photos or other contents. Of course it is possible to take notes, keep track and make bookmark of the things we love as well as check-in in a given venue or save places we like, also sharing itineraries in multiple ways or creating photo board with own contents and others pins.

There has been a growth in internet content as users join numerous community based social networking sites (e.g., Delicious, Facebook, Flickr, Foursquare, Google+, Instagram, LinkedIn, Pinterest, TripAdvisor, Twitter, Yelp, etc.). These sites provide platforms for users to engage with each other by uploading/creating content in the form of commentary, pictures, status updates, etc. Users' statuses, photos, comments and other content is stored by these providers and shared to other users on the platform.

There has also been a growth in the use of mobile devices (e.g., smart phones and watches, tablets, laptops, etc.) that provide the ability to geotag content with a particular location. Geotagging is the process of adding geographical identification metadata. This metadata usually consists of latitude, longitude and altitude coordinates. Mobile devices may have a geolocator such as a GPS (global positioning system) to determine the location of the mobile device. Using the geolocator, a user may take a picture with the mobile device, for example, and the picture may be "geotagged" with the geolocation where the picture was taken. This way, the picture (or other contents such as "live photos" and videos) may later be referenced by location since it is embedded with location coordinates or other attributes that specify its location. So this information may be appended at a later stage or embedded at the time of the photo shooting.

There are many location-based systems in use today that permit users to verify their locations using one or more computer systems. Some services permit users to use their locations for the purpose of interacting within a social network. For instance, within one type of location-based social network, users are permitted to perform a "check-in" to particular locations, including venues such as businesses, hotels, restaurants, attractions, points of interest, or other locations. A check-in generally includes a process that identifies a user with a particular venue location at a given time, and such check-ins may be recorded over time (e.g., by a location-based social network). Such location-based social networks also permit users to interact with friends, find places of interest, leave comments regarding particular venues, among other functions. But the loop is not closed yet.

Planning and sharing a travel experience, today, is fragmented through dozens of websites with specific focus on the selling/booking of some elements singularly considered (e.g. hotels, transports, restaurants) or on certain social/sharing features (e.g. blog, reviews, travel guides).

While social networks are focused on the sharing of content, often distributed in chronological order via social walls and not allowing the sale of services (such as apparel or technology) without starting from pictures uploaded from the merchant, on the other hand, the online travel agencies are focused on selling services categorized by thematic channels (e.g. flights, ferries, hotels or packages) by starting the search from the filling of a form or the iconographic selection of a destination represented by a default image with an inspirational approach.

Therefore geo-tagged content sharing is commonly associated with the photos and not to other types of content such as reviews, check-ins, or events that may also be uniquely related to a specific location. Photos shared by users on social networks have an immediate consumption and use of its own, while those shared on sites that allow posting reviews, as TripAdvisor or Yelp for instance, are often used to support other contents. In both cases, these contents referring to a place or an activity in itself will not trigger the purchase of a given service.

For example Pinterest is a photo sharing application. Users can upload, save, sort, and manage images - known as pins - and other media content (e.g., videos and images) through collections known as pinboards. Pinterest acts as a personalized media platform. Users can browse the content of others in their feed. Users can then save individual pins to one of their own boards using the "Pin It" button, with Pinboards typically organized by a central topic or theme. So users can create and personalize their experience with Pinterest by pinning their or other's items, creating boards and interacting with other members. By doing so, the users "pin feed" displays unique, personalized results. The creation of the board, though the content (only photos) could be considered homogeneous concerning travel related content, does not allow the extraction of a travel itinerary and does not allow reservations of this content, neither individually nor even considered all the photos (associated with place or services) as a whole.

Foursquare is a local search and discovery service mobile app which provides search results for its users. By taking into account the places a user goes, the things they have told the app that they like, and the other users whose advice they trust, Foursquare provides recommendations of the places to go around a user's current location.

Foursquare 8.0 uses its own proprietary technology called Pilgrim to detect a user's location. Pilgrim is able to guess a user's current location by comparing historical check-in data (previous users tacitly stating "I am here") with a combination of signals such as a user's current GPS signal, cell tower triangulation, cellular signal strength and surrounding wifi signals. In this way Foursquare can know a user's location without them needing to "check in".

Foursquare 8.0 also uses Pilgrim to track a user's location in the background. This enables the app to send the user push notifications of things that they might find interesting around their current location. It also uses this ability to learn about the kinds of places a user likes, based on when and how often they visit different venues. It then uses this data to improve a user's recommendations, and to gauge the popularity of a venue.

Foursquare 8.0 features a tab that lets the user see tips about their current location. Pilgrim will guess the current location and the user is able to correct the selection if wrong. The tab displays information about the current venue, and includes a Check-in button. Tapping the button lets the user check in with Swarm, before returning them to Foursquare. If they do not have the app installed, tapping the button opens a page where they can download it. Foursquare app focus on exploring and discovering information on locations, in a Yelp-like fashion but does not allow reservations starting from UGC and user generate contents are used to enrich the contents of the venues/POI (points of interest).

Instagram is an online mobile photo-sharing, video-sharing and social networking service that enables its users to take pictures and videos, and share them on a variety of social networking platforms, such as Facebook, Twitter, Tumblr and Flickr. Instagram allows you to upload geotagged photos (if the device allows you to share your location) and during the loading it suggests related activities or points of interest to associate with that geographical position. The procedure does not create photo albums, but the photos are treated as individual posts, neither it organizes photos in experiences (a given range of time with a beginning and an end as for istance a journey made of several places/pics), nor allows booking services through these.

TripAdvisor is a travel website providing reviews of travel-related and user-generated content. It also includes interactive travel forums. It was an early adopter of the website services are free to users, who provide most of the content, and the website is supported by an advertising business model.

TripAdvisor uses the user-generated contents to enrich the content and truthfulness of its reviews, but they are not treated as individual posts but as a support to the main content of the page dedicated to a selected POI (restaurant, hotel, place, things to do).

It enables users to make table reservation or hotel reservation but the search of a given property or service never starts from the pictures uploaded by other users but from proximity criteria or parameters search.

Facebook provides user-generated contents and store them also using geotags, allows albums creation, saving links or places, provides timeline but experiences are still fragmented treating user-generated contents as single posts without any association with bookable services. Because of the fragmentation of the travel, as anticipated, travelers consult a large number of services when planning a trip and have no way to save this experience in a unique environment unless taking notes and sharing links.

We find the same situation when someone asks us for that trip we did in the past. What we forward? We forward confirmation emails (for flights, hotels) in the absence of a travel plan made of transports, stopovers, accommodations, restaurants, things to do and see. And if our friends want to repeat the trip we made, they may ask to a travel agency to build and quote the same itinerary or they do on their own searching again across multiple websites for hotels, transport, etc.

Tripit gives its response to the issue of travel fragmentation through the invention - US patent application US20090012824A1 - relating generally to coordinating travel plans in a networked environment. More particularly, this invention is directed at supplying an aggregated and enhanced itinerary. Thus, for any given trip an individual may receive multiple itineraries from multiple entities. It would be desirable to provide a technique to aggregate and enhance multiple itineraries received from multiple entities. A computer readable storage medium supplies an aggregated and enhanced itinerary, and includes instructions to select an itinerary template based upon disparate itinerary booking events created for a user. It further includes instructions to evaluate the itinerary messages and identify logical relationships between travel events, and in addition instructions to produce enhanced travel information based on logical relationships identified within the itinerary messages. It further includes instructions to populate an itinerary with information from the received itinerary messages and enhanced travel information, and finally, it includes instructions to deliver the itinerary to a user.

Thus, for any given trip an individual may receive multiple itineraries (booking confirmation emails) from multiple entities (travel suppliers' websites). It would be desirable to provide a technique to aggregate and enhance multiple itineraries received from multiple entities. It aggregates the information downstream but it finds solution to only part of the customer's pain. It doesn't match the experience done with the possibility for other people to live it again triggering booking services.

The US application US20130110631A1 addresses the need for a system and method to aggregate and organize content by geolocation, according to which it would be beneficial to have a superior system and method for aggregating and distributing geotagged content.

The system for aggregating and distributing geotagged content lets a user access a user interface to identify a spatial area and request content from a plurality of content providers that is geotagged with a location within the identified spatial area. As a result, user content is spread among different sites with cohesive way to share content. Thus, user content is not typically organized by user or topic, but by geolocation.

This system aggregates and distributes geotagged content, makes representation of a geographic location, provides for identification of a spatial area relative to the representation of a geographic location; formats and filter a request for geotagged content.

It organizes content by location from a plurality of content providers, but these metadata usually consists of latitude and longitude coordinates. For the same point in the space we may find different commercial activities or for different geographical points we can still refer to the same place. That's why the geolocation may not be a unique method discriminating or otherwise it cannot be the only way - or not at all - to uniquely identify a place or activity despite starting from the aggregated data.

Mobile devices may have a geolocator such as a GPS (global positioning system) to determine the location of the mobile device. Using the geolocator, a user may take a picture with the mobile device, for example, and the picture may be geotagged with the geolocation where the picture was taken. This way, the picture (or other content) may later be referenced by location since it is appended with location coordinates or other attributes that specify its location.

The US application US20090222482A1 relates to a handheld electronic device, such as a GPS-enabled wireless communications device with an embedded camera, automatically geotags a set of data, such as a digital photo, video, notes, or a blog, with a textual plain-language description of the current location. When the data is generated, the current location of the device is determined, e.g. using a GPS receiver. A textual plain-language description of the current location is then generated, e.g. by reverse geocoding the GPS position coordinates or by correlating the current time with a calendar event from which language descriptive of the event can be extracted. This textual plain-language description is automatically generated and written into a tag or metadata file associated with the photo or other set of data. By automatically geotagging data with textual plain-language descriptions that go beyond mere coordinates of latitude and longitude, data can be searched and managed more efficiently for sure but it's not enough to transform a digital content into a bookable object since the geotagging procedure does not include the matching of a determined position to a given activity or service that can be booked online. Moreover if it is almost always possible to automatically associate a geographic location with a picture, it can not be said of the association of a place with a business activity that could vary even if the geographical coordinates were the same. At last a mobile application may be determine coordinates of latitude and longitude also recurring to other technologies already available in an handheld electronic device: network-based, handset-based, SIM-based, Wi-Fi, or hybrid positioning systems use a combination of network-based and handset-based technologies for location determination.

US20130066821A1 discloses a mobile application that provides recommendations based on the knowledge of where the user has been, and what venues the user would like to visit. Such an application may be capable of determining where people in a user's social network have been and what venue locations these related users would like to visit. Also, in another implementation, the application may be capable of determining where people with similar tastes have been, and where they would like to go. Some or all of this information may be used by a mobile application that provides recommendations to a user. For instance, in one implementation, a user having a mobile device such as a cell phone wishes to locate a venue based on one or more parameters, and some or all of this information may be used to order or rank recommendations within the interface.

This system does not take into account, for example, the time in which a search is performed and the subsequent availability of a given service in that time. You can think of the case of the opening hours of a restaurant, the opening days of a museum, the availability of places for an attraction or the distance of a destination. Either all this information may impact negatively on the recommendations procedure or on the itinerary feasibility.

US 20150106366 A1 discloses a group recommendation providing end users in a social group a set of recommended destinations based on the combined personal preferences of the members of the social group. Members of a social group are identified using a combination of location based signals and social graph information in response to receiving a recommendation request. The group recommendation may be determined by combining the personal preferences associated with each member of the group into a master preference profile. Alternatively, the group recommendation may be determined by first calculating an individual recommendation list for each member of the social group and then calculating a composite score for each recommendation on the individual recommendation lists. When people go out to explore restaurants, pubs, attractions, and recreational venues, they tend to do so in groups. They also tend to report their activity using social network features like posts, photos, and check-ins. After deciding to leave one location, they may want recommendations regarding where to go next. Users desire to obtain a set of recommended destinations on their mobile communication device that not only provide recommendations based on their individual personal preferences but are also based on the personal preferences of other members in their group.

Also this system does not take into account, for example, the time in which a search is performed and the subsequent availability of a given service at that time especially because it is about a group of people: see the case of the opening hours of a restaurant, the opening days of a museum, the availability of places for an attraction or the distance of a destination. Either all these information may impact negatively on the recommendations procedure or on the itinerary feasibility.

The invention US 6763148 B1 relates only to image processing and, in particular, to methods whereby still or moving images or other objects are transformed into more compact forms for comparison and other purposes. There's still a lot to do then in order of matching an image to a travel booking process since the method it's just a part of the problem.

In accordance with the disclosure in US 9020529 B2, a user of a mobile device takes a picture of a nearby landmark or building or street and transmits that picture via his device's wireless link to a remote server. The server has the capability of identifying the location from the photo by matching it against publicly available online collections of images, such as Flickr. The server executes a location identification algorithm to match the received photo to those in the collection to determine the actual location of the photo. Typically the images in the collections have metadata, such as textual tags. Upon identifying the most likely location of the received photo from the user, the server transmits back to the user's mobile computing device an indication of the location, such as a textual location description from the tag, a map or directions to a particular location. This is especially useful in a city or dense urban environment and where the mobile computing device does not have GPS capability or its GPS is inoperative. Online travel planning systems make attractions, accommodations, restaurants, bus/cruises/ferries/flights/rentals/trains/transfers reservations available for the average consumer to shop or book online. Online travel agencies (OTAs) sites such as Expedia, Priceline, "sharing-economy" booking sites such as AirBnb, BlaBlaCar, Uber, global distribution systems (GDS) such as Amadeus, Sabre and Travelport or price comparison sites, provide a wide variety of inventory selections from different suppliers companies, directly connected or not.

Most large travel suppliers, such as Ryanair and Marriott also offer their own travel sites where consumers buy directly from the company, which generates and supplies itineraries related to the travel services booked through the company.

Travel reviews sites, such as TripAdvisor, Yelp or travel guides sites as Lonely Planet are more focused on contents than reservations but they also provides itineraries.

In one way or another all travel suppliers provide itineraries but they are not able to collect the entire experience and made it available for other travelers.

Further all of these providers usually start their customer experience typically through a search form which users need to fill in with origin/destination and other data in order to perform a query (comparison, fare quotation, availability).

Sometimes the customer journey starts with recommended destinations represented by hyperlink, images or icons provided by the provider of that service.

In other cases, so called social-wall displays user generated content shared by users which may tag content with locations and other information.

On the other hand, social e-commerce platforms like Fancy or Pinterest are aspirational and inspirational but also generic and, at best, only sometimes give the chance to buy travel packages usually redirecting to external websites, but never giving the opportunity for users to build and consequently book their own itinerary starting from what other users share. Typically social e-commerce don't match user-generated content - e.g. photos - with salable and/or bookable products and/or services. User generated contents do not trigger sales or reservation procedure. They allow users to create boards or wishlists not itineraries.

At last, neither discovery services such as Foursquare nor photo sharing applications such as Pinterest and Instagram, match geotagged user-generated contents with availability, bookability and feasibility parameters. They allow users to save or add items to their wishlists but not let users build itineraries.

Polyvore is a community powered social commerce website. Members curate products into a shared product index and use them to create image collages called "Sets". Sets may be considered a sort of board or wishlist where a user decide that apparently different contents may stay together. Here we are talking about apparel, beauty and home furniture but the concept fits: collecting shared photos using those uploaded by merchants or bookmarked by users from external sites. Each photo is directly connected with a merchant and users can build their sets and buy the corresponding products. Unfortunately, even if the sets may be considered a sort of shopping cart and photos are related to a merchant, users can't upload own photos but just pin them from Polyvore or external sites. In this latter case photos could not necessarily trigger a sale and there can be many transactions as there are different merchants.

Usually people ask their friends for tips about that amazing trip they made. It took time for them to plan it, they have probably visited many websites to book everything and make it the dream holiday. And now they wish users could just pass it on easily and make their friends live their same experience. Typically users visit many online travel agency websites and should fill many forms with origin, destination, date and passengers information as many times as the travel solutions or services (e.g. accommodations or flights) they are looking for. Too bad there is no way to make this happen in a click until now. With object-oriented travel planner discover and pin amazing places you would love to visit, save the things you want to bring with you or the experiences you want to make. It put them all together for you in your travel board that you can book and buy in a single click and then easily pass on to your friends and followers.

So planning and sharing a travel experience, today, is fragmented through dozens of websites with specific focus on the selling/booking of some elements singularly considered (e.g. hotels, transports, restaurants) or on certain social/sharing features (e.g. reviews, travel guides).

All of them do not manage to push customers to use the service on a regular basis but only when they need to get a quotation, and do not succeed in creating a potentially daily customer experience where inspiration and entertainment come together as one.

This scenario causes a dramatic increase in terms of customers acquisition cost, which at the end of the day is not sustainable for any new player, given the relatively low margins at stake, without tremendously high marketing investments.

As of today, a service that, on one hand, turns the product/user approach upside down and, on the other hand, allows to stitch together in one easy, fun and addictive experience all the elements of online travel, simply does not exist.

People share their experiences on social networks through photos, videos, messages, check-ins (when users tell the application when they were at a particular location using a mobile website, text messaging, or a device-specific application by selecting from a list of venues the application locates nearby) or sticker (users can attach a single emoticon to any check-in to quickly express how they feel or what they are doing).

These user-generated contents are massively spread on different social media and their lifecycle are increasingly reduced and they are not valued anymore. They often are not categorized or stored as part of the same experience but considered as a stand-alone content. Experience matters and it is composed of different moments and places. So even a trip consists of the chronological sequence of events but longer makes sense when you consider it in its entirety. Social networks enhance the single post and not the overall experience that is part of it.

On the other hand the online travel agencies (OTAs) enhance the journey and not the experience of the users. The experience lived by a person may itself be a trip. Missing the way to preserve the experience and make people live it again.

There are already publicly available online collections (databases) of images, such as photos of various locations, which are generally provided with what is referred to in the field as "tags" or textual identification information. An example of this is the Flickr web service. Flickr is an online collection of photos posted by various users and which is publicly available and searchable via the Internet (web), including searching it by the tags or locations. This represents a form of user generated content, which is now available and widely used. However these contents cannot be used to plan an itinerary since they typically do not include information about category or travel services, also using a computer based location identification, since the uploaded photos are matched with locations and not with services. Many users utilize multiple social networking sites or other internet platforms. As a result, user content is spread among different sites with no cohesive way to share content and so much less it can be used for others to plan. Further, user content is typically organized by user or topic, but not by geolocation. There is the need for a system and method to aggregate and organize content by precise geolocation or venue location. Therefore, it would be beneficial to have a superior system and method for aggregating and distributing geotagged content.

### Summary of the invention

Therefore it is the main object of the present invention to provide an electronic system and method for travel planning, based on object-oriented technology which overcome the above problems/drawbacks.

The present object-oriented travel planning system relates to a computerized travel planning system based on an innovative selling platform, accessible through an interactive user interface that enables users to share geotagged contents, quote and book all the services associated with simple or complex itineraries built using geotagged user-generated content (UGC). An exemplary computing system has a processor, a memory, an application accessible through a user interface.

The system lets users build their travel experience in a granular way and it lets users choose each element of their itinerary providing a so-called "object" which may be considered as a brick with which to build a personal and tailored experience based on what other people have shared. An object may be represented by icons, images, photos, videos, live photos, maps or text. Each object may represent a physical location that can be associated with a business activity, such as hotel, restaurant, etc., and with a bookable service; or the object may also represent a physical item or service without a physical location.

Each content (e.g. photos, videos, reviews, etc.) shared by users on the system becomes an object that can be used by users to build their own itinerary. The shared contents must meet certain specific requirements to became objects: without limitation some of them can be listed such as latitude, longitude, altitude, type of location or venue, business category. Some of these requirements are mandatory in order to let the system work properly.

So each time a content with the required data is uploaded or imported to the system, the system analyzes the data embedded in a file and/or attached to the content and provides automatically additional related and useful information, on the one side querying internal or external database in order to retrieve data such as ratings, opening time, weather, etc. and on the other side matching them to the user-generated content with other related contents (same kind, same place, same activity), in order to give the user a comprehensive overview of the place/service/product: this way the user can easily select and plan the object as a destination and/or service and/or product placeholder. Then the system automatically builds an itinerary route on the basis of the objects selected by the user and it manages them such as origin and/or destination and/or stop-over and/or product and/or service placeholder. So the itinerary planned is ready to be processed by the system and possibly submitted to a selling platform to find multimodal travel solutions and/or to book services and/or to buy products.

The system processes all this information as if the user had filled out a long form of research and prepares them to submit. The user can also graphically add other information to the itinerary for example dragging & dropping into the interactive timeline some icons representing the number and/or the type of passengers, date of departure and return, the number of nights to spend in each city, or special requests such as wheelchair or pet-friendly venues. The user can also drag the timeline, between a destination and the other, the icons of one or more preferred means of transport that the system will take into consideration in the search for multimodal travel solutions such as a route composed of a combination of taxi + flight + car rental.

For instance a traveler takes a picture of the hotel where he/she just stayed the night from his/her mobile device and uploads a photo to the system through its mobile application. The photo quotes correctly all the geotags needed to associate it univocally to a given hotel. The system, at the time of displaying it on its social wall through the user interface, matches the photo with similar photos in order to show related photos and give the user an overall view of the venue. The system also retrieves dynamically the information related to the property (ratings, comments, availability, rates, opening hours, directions, weather forecast, temperature, etc.) and makes it bookable if another user selects the photo to build an itinerary. Thus a user shares simply a photo and the system does the rest: the system enriches it with additional information and makes it directly available for online booking, so there is no need for users to fill out a form or run a search. They simply select a photo or drag and drop it into a travel board or into an itinerary and the system automatically does the rest, finds multimodal travel solutions to reach that destination.

The more pictures a user selects, the more complex becomes the route, and the system calculates the fare construction, builds a route, and manages the reservation of services.

Obviously the system automatically suggests a route based on the collected or selected objects but the user can edit it at any time, change everything or just modify the route; he can also optimize it by itself or inviting friends and fellow travelers for optimization. The user can always decide if to accept changes or not validate them, save it, book it immediately or after step by step.

In one embodiment the system manages objects subject to time-limit and/or availability, such as events, recurring events, concerts, travel packages or special offers. These kinds of objects embed information such as total availability, recurring dates or when an event happens. The system will display those kinds of content until they are still valid or available, and users may select and plan them including these objects in their itineraries. The system, once the objects have been selected and planned by the users, finds all travel solutions to get there and manages booking, reservation depending on the nature of the object (travel accessory, restaurant, accommodation or point of interest).

Each board or itinerary may be passed among users of the social network or shared with other people with a simple URL, permitting others to take advantage of replicating it as it is or changing it in few steps (such as dates, passengers number or age, stay, night/stay, accommodation, etc.) thereby calculating availability, rates, connections, etc. For instance, in one embodiment, a first user may send another user a planned itinerary or board within his/her social network. The user who receives the link to the itinerary may directly quote and get availability of each object and/or service and/or product associated with the given itinerary with just one submission (clicking a button or first changing some data, such as passengers or dates, before running a search). If some of the services and/or products included in the given itinerary couldn't be available anymore for the chosen dates and/or other filled data, the system will provide other solutions displaying possible alternative solutions. For instance, if the planned hotel could not be more available, the system will display all the alternatives closer to the planned one for user's choice, for example a hotel of the same category, with the same rating, located in the same area could be considered as a valid substitute solution. Paying attention to the itinerary built and/or shared may refer to a booked journey or just planned but not yet enjoyed.

In another example, a user may be provided the ability to permit other users in his/her social network to redeem offers originally made to the user.

According to one embodiment, users select and collect in specific boards shared user generated contents such as photos or videos associated with places, services or travel accessories. The system automatically creates a trek (a graphical representation of a travel plan composed of a timeline and one or more nodes in the timeline) marked by nodes (events) such as destinations and/or services - accommodations, things to do, restaurants, transport connections, etc.) using the collected objects thanks to their geotags and manages in different way the different categories objects

As mentioned before, an interactive timeline is automatically provided by the system by default based on the objects collected and placed in a travel board. A user can then interact with the timeline for example dragging and dropping the objects into the timeline, changing the order of the objects, indicating which nodes (stages in the route) should be considered as main destinations (where users stay for the night) or as simple stopovers of a route. Every time a change is made on the timeline, the system recalculates availability, route feasibility, interconnections between transport modes, travel time, calculation of CO2 consumed or calories, weather forecast. The user can also indicate what are the preferred means of transport connecting each destination with the following one and he/she may enter specific tags as dog, bike, camper. All the entered information by the user using graphical placeholders, such as icons, graphics, images or texts, will be used by the system to compute a complex query, querying all the different providers associated with planned itinerary in order to retrieve and display availability and prices of the related services.

The goal of the timeline (user interface design) is to make the user's interaction as simple and efficient as possible, in terms of accomplishing user goals. The timeline allows the user to build, optimize, visualize, bookmark also complex route itineraries and to calculate all the services associated to the itinerary without filling in forms and allowing to calculate rates, availability and other information with a single search, booking all in one place with a single transaction.

A user can access the application through a mobile or desktop device. He can upload photos and/or videos directly through a mobile device and/or a desktop device such as laptop, pad or notebook or he can also connect his social network accounts in order to import what he shares there or vice-versa.

For each user-generated content, such as photos, videos, live photos, text, check-ins, or bookmarks, imported to the system through mobile/desktop devices or connected social accounts, a user must tag the content with geographical references (address and/or city and/or cap and/or venue or place name and/or coordinates such as latitude, longitude and altitude, business category such as restaurant, accommodation, attraction, point of interest, etc.) manually or automatically when it's possible to detect any tag and to associate it univocally to the content.

Many scenarios are possible:
- the mobile computing device does not have GPS capability (or similar detecting technologies) or its GPS is inoperative;
- the mobile computing device has GPS capability and/or similar detecting technologies and they are operative;
- the contents users want to upload to the system do not contain any tag;
- the contents users want to upload to the system do not contain all or part of the tags needed by the system to compute;
- the contents retrieved from other social networks connected to the system by the users contain or not the needed (by the system) tags to let the platform works properly.

Users access the system through an application installed in his mobile or desktop or browsing the internet. They can also import contents connecting their social networks or similar platforms to the system. Alternatively the user can also import a bookmark from an external website (for istance web page URL, photo/video URL, meta description, meta title, etc.). When a user uploads a photo that has no geo-tag since GPS is not available or inoperative, user must tag the photos before uploading it with required information such as address, business category, type (business activity or item).

The same action should be taken by the user when importing contents from connected platform such as social networks or bookmarked from external sites. If not possible, the system could try to match the tag-less photos or those to which are missing some with similar but already tagged photos stored in the database in order to attribute similar references with a location detection method.

If GPS or similar location detection technologies are available or the content (e.g. the photo) already has got the required data embedded in its source file (typically latitude, longitude, altitude) users must manually add just the missing information if any.

In another embodiment, the application dynamically suggests to the user the venues and/or business category to match the photo using a location-based service that retrieves the geotag from the photo or from the device, if available, hence it starts querying a database where these data are made available (venues, places, bookable services in a given place or its neighborhood).

Once the user-generated contents have been uploaded, imported or created on the system (for instance a user can write a review about a restaurant), they are displayed in the user interface (so-called social wall) and they are made available to users for their travel planning. Each time users access and/or log on to the system a stream of shared contents is displayed in chronological order, even if not all the shared contents are necessarily shown to the user but just the most relevant ones according to an algorithm that computes a score based on specific parameters.

A user may choose the updates to be received on his wall, a general stream or one more specific following (in the mean of Twitter, so subscribing for updates) people (e.g. friends), destinations (e.g. Paris), categories (e.g. hotels) or tags (e.g. travel with #dogs), thus receiving updates in his social wall populated with the related shared contents when the contents are shared and are made available.

In one embodiment a user may import to the system, for instance with a copy and paste or thanks to a sharing method, a simple URL of a specific web page or a source URL of a specific content such as a photo. The system may also manage and create a plannable object from a user generated content even if the user shared content is not physically stored in the system's database. In this case the system can analyze and create an object score of the external content simply analyzing the URL destination content with a robot or similar procedures. Usually a robot or a so-called bot is a web spidering, in which an automated script fetches, analyzes and files information from web servers at many times the speed of a human and retrieves data such as metatags of a page or other contents of from a photo or a video published in a given page.

In one aspect of the present invention, it is desired that an application be provided that provides relevant recommendations based on the knowledge of where the user has been and where the user would like to go as well as which services to provide or not. Also, in another implementation, the application may be capable of determining where people with similar profiles have been, and where they would like to go or what services people with similar behaviors have booked and what they would like to book, as well as tracking the contents with which they have interacted by leaving comments or likes to predict desired services to plan. Some or all of this information may be used by the application that provides recommendations to a user on the basis of a computed score to order or rank or display shared contents within the interface of the device.

A user interface may be provided that allows a user to locate desired contents more quickly.

Also, as the information items to be displayed can be many and interfaces, especially on mobile devices, can display limited results or a user may have little time to search for travel solutions, so it is appreciated that the quality of recommendations within the display is important. An interface, according to one embodiment, may include an ordered list of contents (e.g., responsive to a query including one or more parameters such as keywords, distance, category, etc.), and this list of contents may be ordered based on one or more of the information items described above. According to one embodiment, the list may be adjusted according to personal information (e.g., information recorded regarding the current user's preferences and/or history), social network information (e.g., information recorded regarding the current user's friends), and/or popularity of the items themselves (e.g., as determined by group(s) of users and/or the entire network).

According to one embodiment, a search engine associated with a location-based service may provide more relevant information based on one or more inputs provided by a user (e.g., via an interface of a device) and/or matched with real time availability by the system. For instance, a user may be located at a particular location and he decides he/she would like to reserve an hotel. The search engine may use any parameters provided by the user and the system (e.g., location of the user in latitude/longitude, altitude, seat/room/table availability in a given time, etc.) to determine a list of suggested contents to display.

According to one embodiment, shared or available information may be scored using one or more functions that determine the user's preference for a particular kind of content or location. For instance, collaborative filtering functions, item-item correlation, k-nearest neighbors, or other functions may be used to determine a user's preference. Generally, such functions have been used to predict a user's affinity for certain products (e.g., things to pack before traveling, music compilations to listen to while traveling, attractions to be booked in a given destination, etc.).

According to one embodiment, the system comprises an image recognition module that enables to recognize a place, and object or a venue and its related business category (hotel, restaurant) comparing photos without tags loaded by a user with similar photos already tagged. Apple, Google, Facebook and many other giant tech players provide image recognition detection technologies in order to "understand" the meaning of a picture such as people's faces, a given object framed in the picture or just a place. In a narrower sense image recognition detection maybe used by the system to make user's life easier uploading photos to the platform without the need to provide more details. They are ready to be associated to bookable/buyable services and to be planned by other users.

Friends' choices (also from other social network connections), same taste users, same behavior users, locations already visited or not by the users or same profile users, services already booked or not by users or same profile users, distance and other spatial parameters, popularity (most rated, most voted, most liked, most commented, most shared, most booked or sold, most clicked/tapped, etc.), semantic computation, those are all parameter that the system can take into account for his ranking computations in order to display or not an object (e.g. photo, video, related content and their tags) on an interface.

It is a particular object of the present invention a method for travel planning, based on object-oriented technology, performed on an electronic system comprising one or more electronic front-end sides, as clients, at least one electronic backend side, as server, one or more storing databases bidirectionally connected to said backend side, comprising the following steps:
- logging in and accessing the electronic system through said frontend side;
- starting communication between said electronic front end side and backend side;
- performing a validation process and creating at least a new User Generated Content (UGC) at said front end side, sending it to said backend side, and storing it in said storing databases;
- through a content manager module, at said backend side, analyzing said User Generated Content (UGC) and assigning a ranking score to said User Generated Content (UGC), creating an object by associating said User Generated Content (UGC) and said scoring , and additional information of geotagging and category, said additional information coming from said frontend side and/or from said storing databases, storing said object in said storing databases;- through a search manager module, at said backend side, searching a number of said objects in said storing databases based on said ranking score, creating a proposed graphic representation of an itinerary with a sequence of said objects, in a given order according to said ranking score, displaying said proposed graphic representation of an itinerary through said frontend,;
- at said one or more electronic front-end sides selecting objects from said proposed graphic representation of an itinerary , and building up a graphic representation of an itinerary of said travel planning according to the selected objects, and sending it to said backend side.

It is another object of the present invention an electronic system adapted to perform the method.

It is a further object of the present invention an electronic user device comprising an electronic front-end adapted to perform the method.

Compared to the prior art features, the system of the invention may execute a location identification algorithm to match the received photo to those in the collection to determine the actual location or venue of the photo and match it with reservation process in order to make the photo immediately be planned like a brick in a wall, it can be selected by another user as stages of his itinerary. The system of the invention also allows users to upload their own photos and create their own wish-list and itineraries using also others' photos that trigger a reservation, and to book all (services related to a photos and/or the tickets need to reach a given destination) in just one charge.

These and further objects are achieved by means of an electronic system and method for travel planning, based on object-oriented technology, as described in the attached claims, which are considered an integral part of the present description.

### Brief description of the drawings.

The invention will become fully clear from the following detailed description, given by way of a mere exemplifying and non-limiting example, also with reference to the attached drawing figures, wherein:
FIG. 1 is a schematic diagram depicting the system according to the present teachings;
FIG. 2 is a schematic diagram depicting one embodiment of data transfer (so called Caronte) according to the system of FIG. 1;
FIG. 3 is a schematic diagram depicting one embodiment of data transfer (so called Washer) according to the system of FIG. 1;

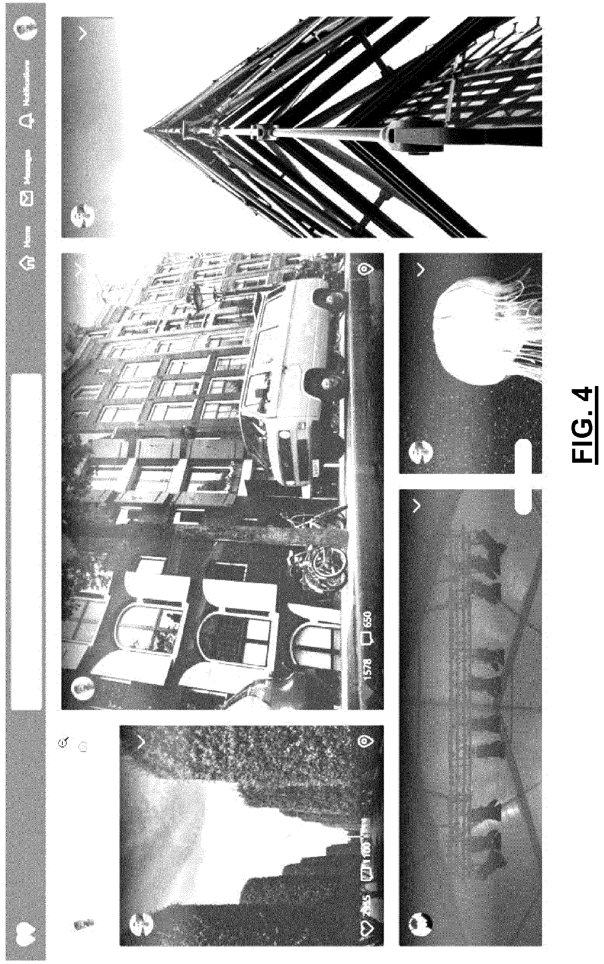

FIG. 4 is an embodiment of the user interface according to FIG. 1 depicting a social wall;
FIG. 5 is an embodiment of a user interface according to FIG. 1 depicting a user travel board;
FIG. 6 is an embodiment of another user interface according to FIG. 1 depicting a user itinerary and timeline;
FIG. 7 is a schematic diagram depicting two embodiments, the so called Caronte procedure A and the Washer procedure B according to the system of FIG. 1;

The same reference numerals or letters in the figures designate the same or functionally equivalent parts.

### Detailed description of the preferred embodiments

As said above, the present invention relates to an object-oriented travel planning system comprising a computerized travel planning system based on an innovative selling platform, accessible through an interactive user interface that enables users to share geotagged contents, quote and book all the services associated with simple or complex itineraries built using geotagged user-generated content (UGC). An exemplary computing system has a processor, a memory, an application accessible through a user interface.

A user-generated content (UGC) is processes by the system according to certain methods, known per se, in order to allow a user to select it, include it in his/her own board, triggering a range of services depending on the nature of the selected object. In the present embodiment, the system might allow a user to book an hotel and/or know and plan the necessary means of transport to get there by simply selecting a shared photo also by another user, jumping a series of steps such as figure out where the photo was taken, fill out the forms (with information such as origin, destination, date, number of passengers, etc.) then click to submit a query, thus look for the desired structure, at last selecting it.

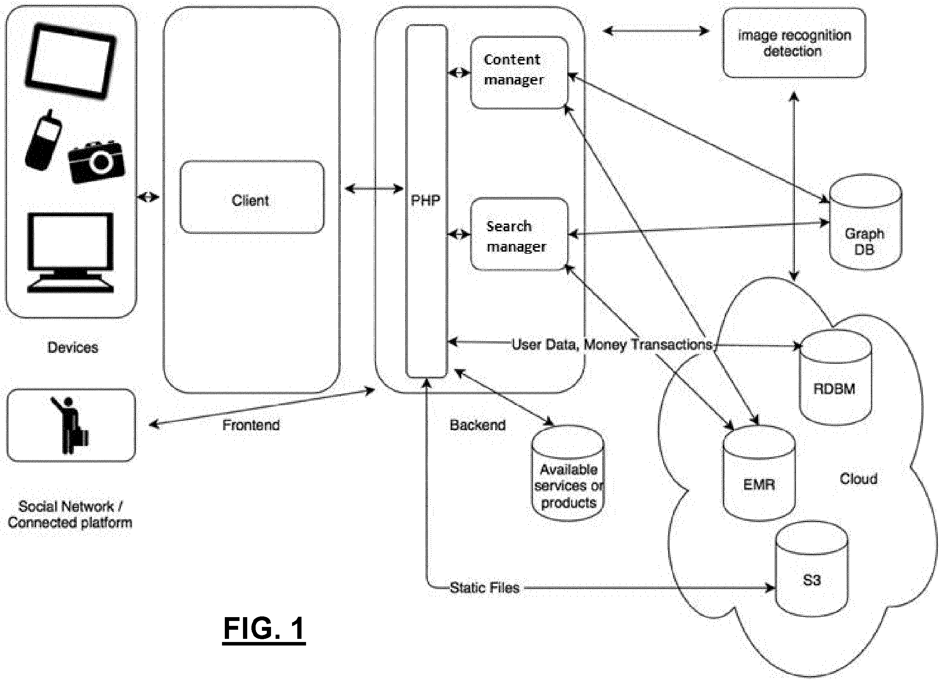

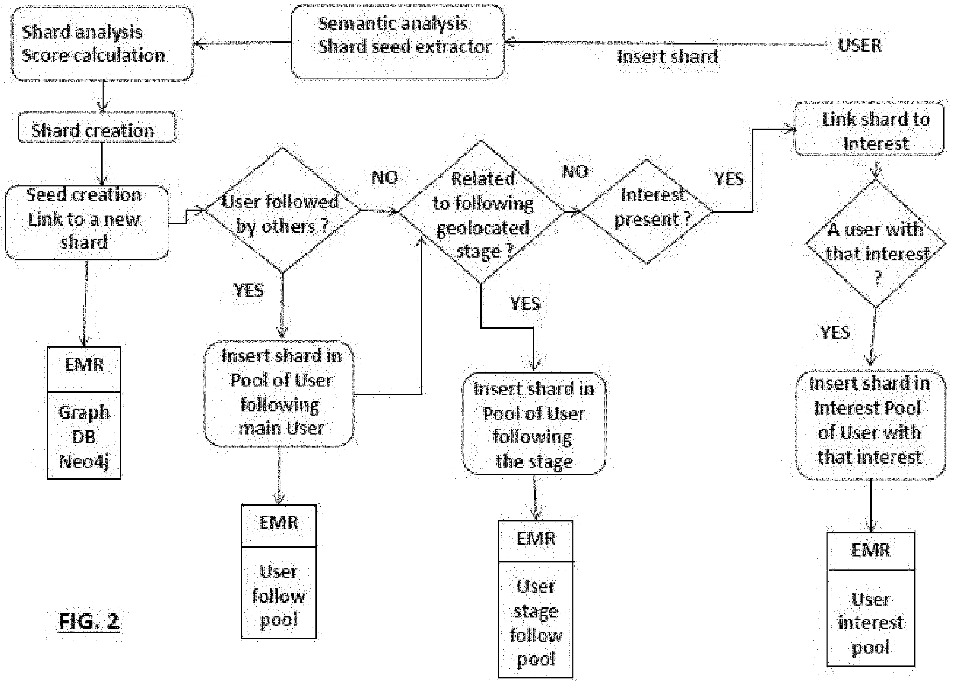

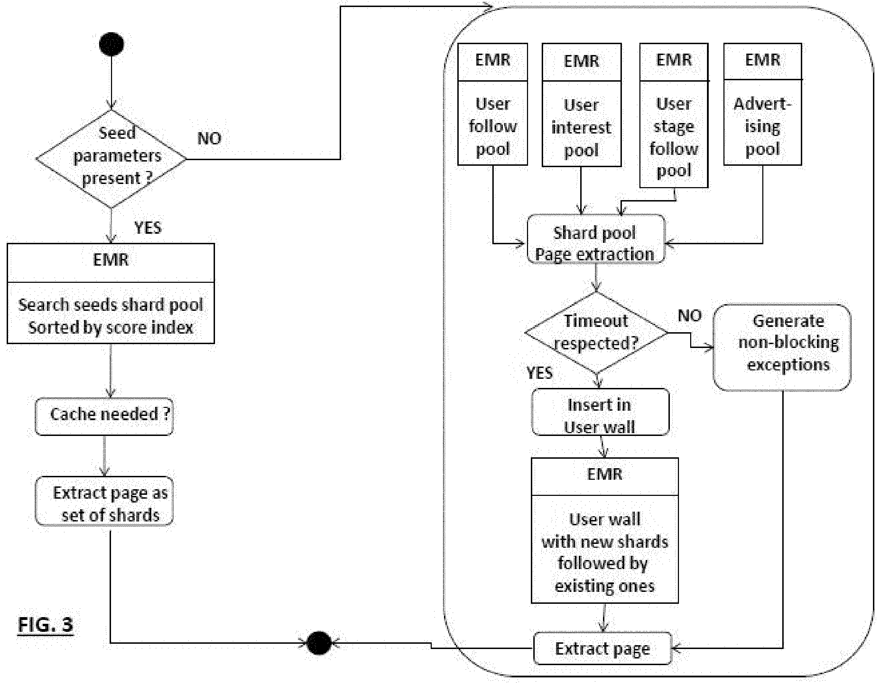

As described above, the overall procedure of the method of the invention may be briefly summarized as follows according to FIG. 1:
- User logs in and accesses to the system through a Client (Frontend side).
- The Frontend side (in the user device) communicates with the Backend side (residing in the server side).
- A validation process starts and a new User Generated Content (UGC) is created and stored by the system in the Cloud.
- A Content Manager module (detailed also with reference to Fig. 2) analyzes the UGC and assigns a score to each UGC taking into account user preferences and other metrics; the data are stored in the relevant data bases;
- A search manager module (detailed also with reference to Fig. 3) displays the objects (shards or UGCs) through a user interface in a given order (e.g. chronological) according to a ranking score calculated for a specific user;
- A user may select objects or collect them creating thematic boards and/or itineraries automatically built by the system according to the selected and/or collected objects;
- The thematic boards and/or itineraries are rendered available for further use, for example preferably the system starts e-commerce procedure or reservation process depending on the nature of objects (sellable product or bookable service);

### User generates content (UGC) in the system

A user accesses to the system through a Client application or browsing the website using a mobile device or desktop computer (Fig.1). He can upload various kinds of content such as photos, live photos, still or animated gifs, videos, texts or he can just share his position with a check-in method directly through a mobile or desktop device. A user can also import contents from other social networks connecting his/her account or from other sharing platforms, or he/she can bookmark contents from external websites with a browser's plugin or just copying & pasting the URL address of the external web page in the Client's user interface.

For each content uploaded, imported or bookmarked, a user must provide to the system additional information if the required data are not available in the photo file or they haven't been matched with automatic procedures, for instance metadata, tags relative to geographical references or better in specific: address and/or city and/or cap and/or venue or place name and/or coordinates such as latitude, longitude and altitude, business category such as restaurant, accommodation, attraction, point of interest, items, etc.

Manual or automatic tagging procedure requires to associate univocally data to the content. The data can be stored in the content file, for instance embedding data in the photo file, and/or in a database so that the system manages the object taking into account all the embedded and recorded data associated univocally to a given content.

When a user provides content there could be many scenarios:
- the mobile computing device does not have GPS capability (or similar detecting technologies) or its GPS is inoperative;
- the mobile computing device has GPS capability and/or similar detecting technologies and they are operative;
- the contents users want to upload to the system do not contain any tag;
- the contents users want to upload to the system do not contain all or part of the tags needed by the system to compute;
- the contents retrieved and/or provided from other social network platforms connected to the system by the users contain or not the needed (by the system) tags to let the platform works properly.

Users access the system through an application installed in his mobile or desktop or browsing the internet as depicted in Fig. 1. They can also import contents connecting their social networks or similar platforms to the system. Alternatively the user can also import a bookmark from an external website (for instance web page URL, photo/video URL, meta description, meta title, etc.).

When a user uploads a photo that has no geo-tag since GPS is not available or inoperative, user must tag the photos before uploading it with required information such as address, business category, type (business activity or item).

The same action should be taken by the user when he is importing contents from connected platforms such as social networks or when contents are bookmarked from external sites. Otherwise the system could try to compare the unlabeled photo provided by the user or those to which are missing some tags with similar but already tagged photos stored in the database in order to assign same references to similar photos thanks to a location detection method.

If GPS or similar location detection technologies are available or the content (e.g. the photo) already has got the required data embedded in its source file (typically latitude, longitude, altitude) users must manually add just the missing information if any.

In another embodiment, the application dynamically suggests to the user the venues and/or business category to match the photo using a location-based service that retrieves the geotags from the photo or from the device, if available, hence it starts querying a database where these data are made available (venues, places, bookable services in a given place or its neighborhood).

In one embodiment the system may manage user generated content subject to a specific time-limit and/or availability such as events, recurring events, concerts, travel packages or special offers. These kind of objects embed information such as total availability, recurring dates or when an event happens. The system will display those kind of content until they are still valid or available, and users may select and plan them including these objects in their itineraries. The system, once the objects have been selected and planned by the users, finds all travel solutions to get there and manages booking, reservation or sale depending on the nature of the object (travel accessory, restaurant, accommodation or point of interest).

In another embodiment a user may import to the system, for instance with a copy and paste or thanks to a sharing method, a simple URL of a specific web pages or a source URL of a specific content such as a photo. The system may also manage and create a plannable object from a user generated content even if the user shared content is not physically stored in the system's database. In this case the system can analyze and create an object score of the external content simply analyzing the url destination content with a robot or similar procedures. Usually a robot or a so-called bot is a web spidering, in which an automated script fetches, analyzes and files information from web servers at many times the speed of a human and retrieves data such as metatags of a page or other contents of from a photo or a video published in a given page.

### The system creates an object matching UGC with bookable services and/or salable products.

Once the contents have been uploaded, imported or generated, the system creates a object that can be directly used by users to plan their experience when selected. An object is a placeholder that replaces a search criterion and it can be represented by icons, images, photos, texts, videos, sounds or other digital files. When an object is created starting from the user-generated content, that content is used as a placeholder, for instance a photo of the Eiffel Tower in Paris.

One object may refer either to a place such as an amazing beach, or a service that is performed in a given place such as an hotel or a museum, or to a product or service not necessarily associated with a location (travel accessories or travel insurance).

To create an object the system needs mandatory information that can be provided with automatic procedures or manually by the users. The required data are: address and/or city and/or cap and/or venue or place name and/or coordinates such as latitude, longitude and altitude, business category such as restaurant, accommodation, attraction, point of interest, etc. All those data, once available, are retrieved by the system to query an inventory database and/or other external providers in order to link the user-generated content with the ability to purchase or make a reservation. So the UGC when becomes an object may trigger, when selected, a reservation process or an e-commerce procedure. The system also uses geo-tag references to find multimodal travel solutions to reach the destination associated with the given content. When an object refers to a service or product that is not available by the platform, the system can provide an external destination URL. An URL can be uploaded also by the user.

When an object doesn't support location or external URL, it is processed as an item and it goes in a specific repository. All the rest may be selected by users to build their itinerary and the system automatically creates a travel timeline using the geotag data reference for instance embedded in a photo file and/or associated with the objects. The system then manages in different way all the objects according to the category they belong in order to process properly an hotel or a restaurant reservation or a tickets booking.

The system, while creating an object, retrieves relevant information corresponding to a given place or venue and provides them to the user. For instance a user shares a restaurant pic and the system automatically retrieves from a database information that user hasn't provided such as ratings, opening hours, brief descriptions, third party comments, directions, etc. All that information may be appreciated and taken into account by the user when he is deciding whether to include the place or venues as a stage of his route.

Furthermore the user, through the planning object method, always manages to get a complete overview of the shared locations because starting from any kind of shared content he succeeds to learn more about the place thanks both to the information that the system automatically associates to shared photos and to similar related photos for instance taken in the same place by other users, including maps and other useful information that make it easier to make a decision. So that, even if a traveler loads a selfie for instance - a self-portrait photograph, typically taken with a digital camera or camera phone held in the hand or supported by a selfie stick - other users manage to figure out where the photo was taken and, if they like the place, they can use this selfie as a placeholder of the stage of their journey, then they might use this object to plan their trek. The system uses each kind of content indifferently to build stages and route itinerary and trigger related booking/sale process.

### The system displays the objects through a user interface in a given order (e.g. chronological) according to a ranking score based calculated for a specific user.

Once the user-generated contents have been uploaded, imported or created on the system (for instance a user can write a review about a restaurant), they are displayed in the user interface (so-called social wall) and they are made available to users for their travel planning. Each time users access and/or log on to the system a stream of shared contents is displayed mainly in chronological order, even if not all the shared contents are necessarily shown to the user but just the most relevant accordingly to an algorithm that computes a score based on specific parameters.

The system assigns a score to each object taking into account user preferences (such as gender, age, preferred places, where has been, etc.), his social network (friends preferences, where they have been, etc.), semantic parameters (retrieved from the objects with which a user interacted) and other calculated metrics (such as popularity: most rated, most voted, most liked, most tagged, most commented, most recommended, most shared, most booked or sold, most clicked/tapped, etc.).

The system displays the objects through a user interface in a given order (e.g. chronological) according to a ranking score based calculated for each specific user. Each user interaction with displayed objects may impact on score calculation since the system takes into account the values associated to a taken object.

Users may select objects or collect them creating generic or thematic board or specific itineraries.

In one implementation, each shared content (location based content or product/service) may have multiple scores associated with it, based on functions, popularity, additional information such as preference information for venues already visited (e.g., "tips" to other users) and preferences for venues that the user has not yet visited (e.g., "to do" information). A semantic analysis is performed to extract keywords from the content associated with the objects, with which a user or his network of friends interact, that match their interests and contribute to better profile a user. These scores may be added up for each object, and the score may be adjusted for other factors (e.g., adjusted by the probability that the venue is open and available e.g. a room in a hotel) and a new score may be determined. The output list of objects may be ranked in the order of these final object scores. Also as a result of a search done by the user that filters the overall results displayed in the wall by category, destination or other parameters such as tag like #dogs. Also in this case the system applies the calculated score to the results.

A predetermined number of top scores may be provided to the user as recommendations. Such a list may be displayed within an interface of a mobile device associated with the user. Further, any justifications for particular rankings of recommendations may be provided to the user within the interface (e.g., "Your friend recommended to visit this place.") to permit the user to make a more informed choice of objects.

### Users select objects or collect them creating thematic board and/or itineraries automatically built by the system according to the selected and/or collected objects.

When the objects are moved into an itinerary board, the system automatically builds route itineraries according to the selected and/or collected objects; by default the system displays an itinerary route made of the locations associated with the selected objects and order them in chronological order (when a user selected an object) and/or proximity order (from the closest location to the user origin departure to the following destination) and/or other criteria chosen by the user. In any time a user or allowed traveling companions or friends or other people may modify the itinerary in any way, such as changing the order or adding new object or deleting some, adding passengers or changing dates or stay.

For every change made to the user's itinerary by other people, the user has to approve the new itinerary to make it effective before calculating rates and availability and proceeding with booking.

If an object does not contain a geotag and is therefore categorized as an article luggage, it is placed in a special section of the itinerary, so called "suitcase" where the system suggests things to take with you in a trip. Also other people or friends may tag objects to a specific itinerary board or its related suitcase.

If the system is able to process a sale for a given object (in case of travel accessories), it can be both purchased at the time of booking the trip or separately at a later time.

If an object cannot be sold or booked by the system, the system can provide a deep link to the site that offers that service or product and you can finalize the purchase externally.

A user can buy and book all or part of the objects included in an itinerary or suitcase. The system starts e-commerce procedure or reservation process depending on the nature of objects (sellable product or bookable service).

With reference to the notations used in Fig. 1, an exemplary computing system of the invention has a processor, a memory and a software application (Core and Backend) accessible through a user interface (Frontend).

In one embodiment, the system comprises a server having one or more storages, which may comprise, for example, any type of electronic storage device and may be configured as one or more database(es). The system also comprises one or more interfaces accessible through the different devices. User computers may communicate with the server or cloud computing server over a network such as the Internet and utilize one of the one or more interfaces in order to request geotagged content relevant to a particular location.

Frontend side may be developed with -known technologies such as:
- AngularJS (commonly referred to as "Angular" or "Angular.js") is an open-source web application framework mainly maintained by Google and by a community of individual developers and corporations to address many of the challenges encountered in developing single-page applications.
- Bootstrap is a free and open-source collection of tools for creating websites and web applications. It contains HTML- and CSS-based design templates for typography, forms, buttons, navigation and other interface components, as well as optional JavaScript extensions.
- HTML5 is a markup language used for structuring and presenting content on the World Wide Web.
- CSS3 Cascading Style Sheets is a style sheet language used for describing the presentation of a document written in a markup language
- Node.js is an open-source, cross-platform runtime environment for developing server-side web applications.

Backend side may be developed with -known technologies such as:
- PHP is a server-side scripting language designed for web development but also used as a general-purpose programming language.
- Java is a general-purpose computer programming language that is concurrent, class-based, object-oriented, and specifically designed to have as few implementation dependencies as possible.
- Neo4j is an open-source graph database implemented in Java and accessible from software written in other languages using the Cypher query language through a transactional HTTP endpoint. The developers describe Neo4j as an ACID-compliant transactional database with native graph storage and processing. Neo4j is the most popular graph database.
- MongoDB (from humongous) is a cross-platform document-oriented database. Classified as a NoSQL database, MongoDB eschews the traditional table-based relational database structure in favor of JSON-like documents with dynamic schemas (MongoDB calls the format BSON), making the integration of data in certain types of applications easier and faster.
- MySQL is an open-source relational database management system (RDBMS); in July 2013, it was the world's second most widely used RDBMS, and the most widely used open-source client-server model RDBMS.
- Redis is a data structure server. It is open-source, networked, in-memory, and stores keys with optional durability.
- Symfony is a PHP web application framework for MVC applications. Symfony is free software and released under the MIT license.
- Node.js is an open-source, cross-platform runtime environment for developing server-side web applications.

Frontend interface comprises a client that communicates with the backend side through Rest API protocol. An Application Programming Interface (API) is a set of routines, protocols, and tools for building software applications and Representational State Transfer (REST) is the software architectural style of the World Wide Web.

Backend side comprises a software PHP coded that is dedicated to providing an authentication system through a JSON Web Token (JWT) and control over operations with ACL.

JSON, (JavaScript Object Notation), is an open standard format that uses human-readable text to transmit data objects consisting of attribute-value pairs. It is the primary data format used for asynchronous browser/server communication (AJAJ), largely replacing XML (used by AJAX).

An access control list (ACL), with respect to a computer file system, is a list of permissions attached to an object. An ACL specifies which users or system processes are granted access to objects, as well as what operations are allowed on given objects.

In computing technology, a graph database, such as Neo4j, is a database that uses graph structures for semantic queries with nodes, edges and properties to represent and store data. Compared with relational databases, graph databases are often faster for associative data sets and map more directly to the structure of object-oriented applications. They can scale more naturally to large data sets as they do not typically require expensive join operations. As they depend less on a rigid schema, they are more suitable to manage ad hoc and changing data with evolving schemas. Conversely, relational databases are typically faster at performing the same operation on large numbers of data elements. Graph databases are a powerful tool for graph-like queries, for example computing the shortest path between two nodes in the graph. Other graph-like queries can be performed over a graph database in a natural way (for example graph's diameter computations or community detection).

Cloud computing, also known as on-demand computing, is a kind of Internet-based computing, where shared resources, data and information are provided to computers and other devices on-demand. It is a model for enabling ubiquitous, on-demand access to a shared pool of configurable computing resources. Cloud computing and storage solutions provide users and enterprises with various capabilities to store and process their data in third-party data centers. It relies on sharing of resources to achieve coherence and economies of scale, similar to a utility (like the electricity grid) over a network. At the foundation of cloud computing is the broader concept of converged infrastructure and shared services.

The backend includes mainly two modules:
A content manager module, that analyzes UGC and manages the insertion of objects so-called shards into the graph database such as Neo4j and the cloud dabatase EMR.

A search manager module, that handles the retrieving process of the shards from the graph database such as Neo4j and the cloud dabatase EMR.

Frontend and Backend communicate through a PHP layer where content manager module and search manager module are placed. The Backend side performs advanced operations in the management and aggregation of the shard objects.

The PHP layer also manages the automatic itinerary route building through the Frontend User Interface, queries internal and/or external databases to retrieve inventory, availability and quotation to be associated with objects and trigger the e-commerce procedure.

S3, RDBM and EMR are cloud databases:
S3 is a files repository where all the uploaded contents are physically stored such as disk image file formats.

EMR - Elastic MapReduce - stores all the users' pools.

RDBM - Relational DataBase Management System (RDBMS) is a database management system (DBMS) that is based on the relational model sensitive data that stores secure data such as user data, money transaction data, etc.

The graph database, such as Neo4j, stores data such as shard IDs, their logical ordering and the relations between a user and them (following).

Another database may provide availability and/or inventory informations about services or products to be reserved or booked. The system may also query external suppliers if some services or products are provided by third parties providers.

### The content manager module

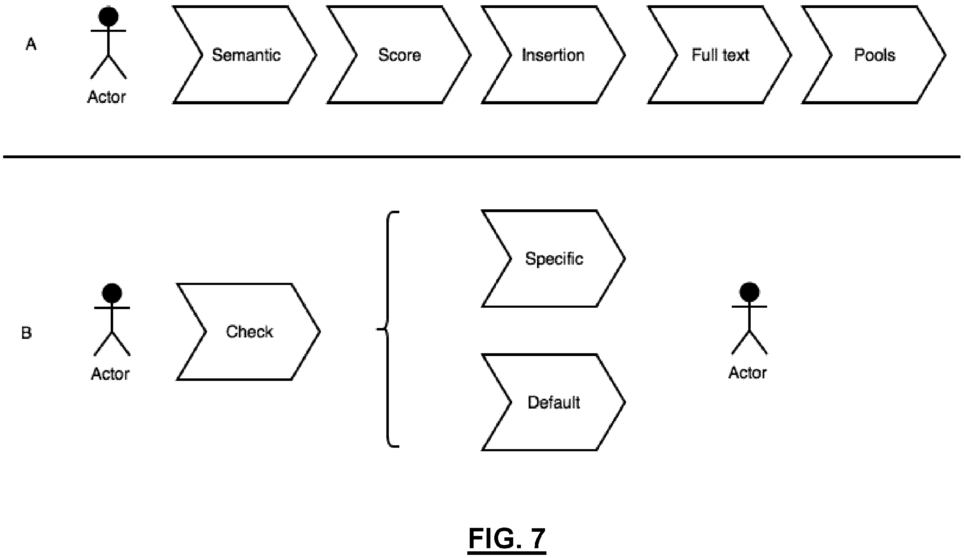

According to the diagram of FIG. 2 , the content manager module is an asynchronous process that is launched every time an entry shard (object) is ready to populate the graph database. The operations are performed in series and the sequence of operations, according to the diagram A of FIG. 7, it performs once received a shard are:
- **Semantic analysis:** The shard is subjected to a semantic analysis where its visual and/or textual content is analyzed to extract keywords to understand better user's preferences, categories, etc.
- **Score calculation:** For each analyzed shard, at least one score is calculated, so for instance the ranking of the shard displayed to a user may vary according to the shard's score itself and its presence in one or more user's pools. A pool reflects the relevance to the user's interest and it records scored shards. The score computation takes into account many factors, including the time value and/or a time-limit and/or availability, the number of user's interests, categories, user's social network metrics, calculated metrics. The score will also be influenced by the number of social interactions occurred for a given shard.

Then each shard has a score calculated on the basis of the relevance criteria to the user. So the same shard may have the same score but it may rank differently depending on the user and the consequent presence of the shard in his/her pools.
- **Insertion of a shard.** The shard at this point is created physically and saved in a graph database, such as Neo4j.
- **Insertion in full text index.** The shard is added to a full-text index indexing properties such as title and description. If the shard is also geotagged, then it is included in the index the geo ID of the nearest POI - point of interest.
- **Inclusion in the pool of general interests.** This method checks if the interests have been already associated with a given shard in the graph database Neo4j. If not, they are are created and the shards are now placed in the pool of general interests. NOTE: "pool" means data structures of type **binary search trees** (BST), sometimes called ordered or sorted binary trees (called score in this embodiment), are a particular type of containers. In computer science, a stack or LIFO (last in, first out) is an abstract data type that serves as a collection of elements, with two principal operations: push, which adds an element to the collection, and pop, which removes the last element that was added. So push operation places immediately the data in an ordered position in the data structure. Then pop operation extracts the item with higher score for sure.
- Inclusion in the pool of interest. At this point all users who have the interests extracted from shard are searched and thus an association shard-user is created for each user.
- Inclusion in the pool of people followed. Similarly all the people who follow the owner of a given shard are searched and for each user the corresponding pool is updated.
- Inclusion in the pool of sites followed. Finally if the shard is geo-located search is that users follow a clearly defined for each shard and for each user the corresponding pool of places is updated.

The same procedure is held for each new instance the system takes into account for its computation populating the corresponding pool.

A non-limiting example of software flow chart of the implementation of the content manager module is given in Fig. 2, which contains self-explanatory definitions and interconnections between blocks , implemented by software technologies as described above. The skilled in the art understands the way of software implementation without further explanations.

### The search manager module

According to the diagram of FIG. 3, the search manager module is a reading module which computes the affinity of a shard to a given search query and it mainly handles the retrieving procedure of the shards from the graph database such as Neo4j. For instance a user can search for vegan restaurants in Paris or just access to his/her wall to receive updating from the people he/she follows. These are both considered searches (push or pull).

According to the diagram of FIG. 7B the search manager has two main behaviors, or better functionalities, depending on whether the search terms entered by the end user are present or not:
In one embodiment, according to the diagram B of FIG. 7, the search terms entered by the end user are present, so the system queries the full-text index specifying the ID of the geotagged object and more search parameters. The result is then inserted in a cache and returned paged.
In another embodiment, according to the diagram B of FIG. 7, the search parameters are not available, then the system shows the user a default stream made of customized content based on the user preferences by going, thus the search manager extracts from the database all those shards/objects that matches the interests stored in the corresponding pools such as: the user's interests, people who are following the user, the places and/or destinations and/or itineraries and/or tags and/or venues user is following, sponsored shards, etc. Finally all those data stored in a given pool database are read by this method that helps to display the objects according to an index of user-relevance..

An arbitrary number of parameters will be taken into account according to a configurable criteria. Then, the taken parameters will be inserted in a concatenated list that will be composed of the above taken parameters plus those just extracted. From this the corresponding (to the parameters) shards list will be picked up for displaying them paged to the user in a tailored stream of relevant contents. In the event that the extraction is slower than a predetermined maximum time-limit, the system will provide a default content picking up directly from the list the needed parameters to compose a page and display it to the user. The system will display contents subjet to time-limit or availability until they are still valid or available, to allow users to select and plan them including these objects in their itineraries. Every user interaction with a shard such as comments, ratings, etc., or his/her social network interaction such as same-tastes people or friends, may affect the overall score associated with the displayed shard. These interaction data are collected by the system and taken into account to compute a new score, so this means the system reorders the data stored in the pools (database) on the basis of the recorded social actions in order to increase the ranking and improve the consequent visibility of the shards that have been affected by multiple iterations. A non-limiting example of software flow chart of the implementation of the search manager module is given in Fig. 3, which contains self-explanatory definitions and interconnections between blocks, implemented by software technologies as described above. The skilled in the art understands the way of software implementation without further explanations.

So users access to the system and may upload their contents, collect objects and organize them in generic boards or specific itineraries.

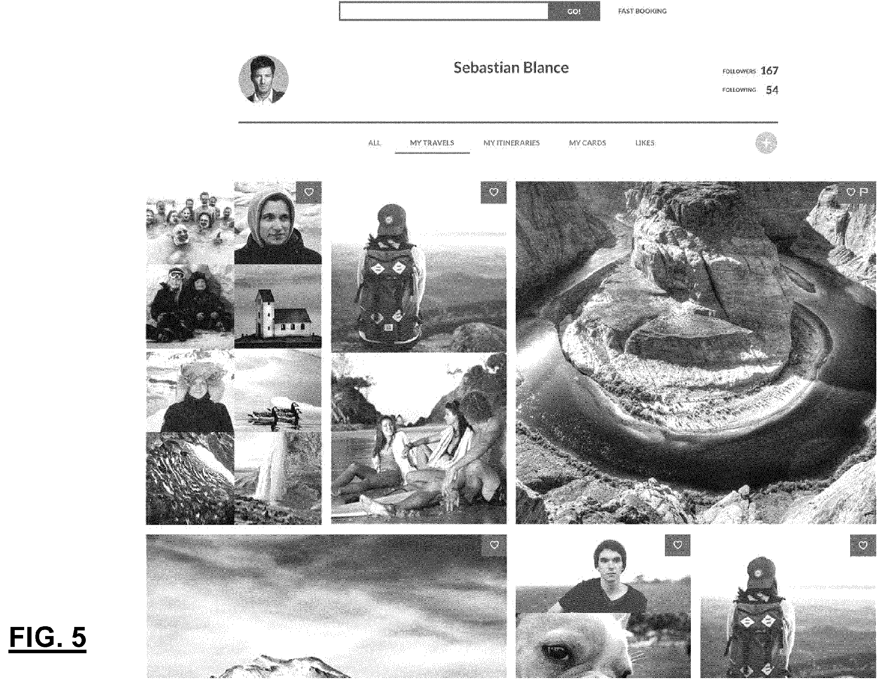

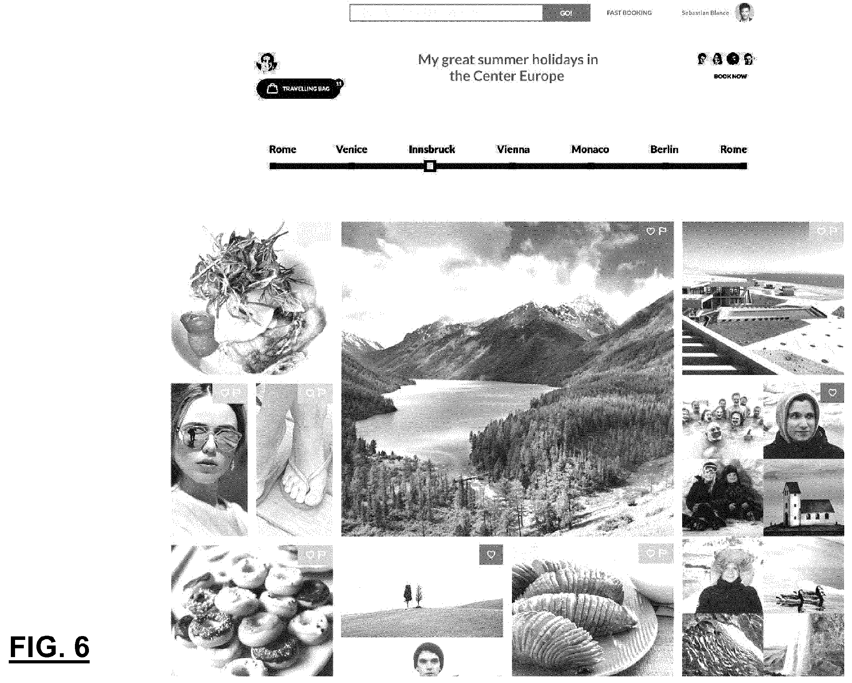

Each board, as depicted for instance in FIG.5, or itinerary as in FIG.6 may be passed among users of the social network or shared with other people with a simple URL, permitting others to take advantage of replicate as it is or changing it in few steps (such as dates, passengers number or age, stay, night/stay, accommodation, etc.) thereby calculating availability, rates, connections, etc. For instance, in one embodiment, a first user may send another user within his/her social network a planned itinerary or board. The user who receives the link to the itinerary may directly quote and get availability of each object and/or service and/or product associated with the given itinerary with just one submission (clicking a button or first changing some data, such as passengers or dates, before running a search). If some of the services and/or product included in the given itinerary couldn't be available anymore for the choosen dates and/or other filled data, the system will provide other solutions displaying possible alternative solutions. For instance, if the planned hotel could not be more available, the system will display all the alternatives closer to the planned one for user's choice, for example a hotel of the same category, with the same rating, located in the same area could be considered as a valid substitute solution.

Pay attention to the itinerary built and/or shared may refer to a booked journey or just planned but not yet enjoyed.

In another example, a user may be provided the ability to permit other users in his/her social network to redeem offers originally made to the user.

Then the system provides an interactive graphical representation of the user's itinerary, processing all the selected (by the user) contents in a given board, such as icons and photos related to hotels, means of transport or places, creating a services and/or products shopping cart and providing multimodal transit routes, in order to predispose all for an availability request and trigger the sale and/or reservation process with a single transaction.

The system automatically creates an itinerary which is a graphical representation of a travel plan composed of a timeline and one or more nodes in the timeline distributed in chronological or logical order. Each timeline has at least one origin and one or more destinations marked by nodes. Each node may represent a simple place and/or a venue and/or a payment service such as accommodations, things to do, restaurants, etc. Between two or more nodes, one or more transport mode icon placeholders can be present on the timeline: they may represent the user preferred travel solution such as flight or bike chosen to reach a given destination, or they can also may represent the combinations of transport modes suggested by the system to connect destinations.

The system processes the user collected objects thanks to their geotags and other available information and manages them in a different way the diverse categories objects, displaying a timeline, creating routes, finding travel solutions and building a complex query ready to be submitted for a booking and/or sale purpose.

Once the itinerary has been built the user can quote and book it by clicking on the special button. All the information associated with the travel boards and more specifically to the timeline are then passed to the selling platform that provides to retrieve all the required data from suppliers, build route and feasible itinerary, check availability, display to the user all the available travel solutions, the user choose the one that fit his/her needs and then the system confirms the reservation of each service/product related to the itinerary only after the positive response from payment gateway or the chosen method of payment.

As mentioned before, an interactive timeline is automatically provided by the system by default based on the objects collected and placed in a travel board. A user can then interact with the timeline for example dragging and dropping the objects into the timeline, changing the order of the objects, indicating which nodes (stages in the route) should be considered as main destinations (where users stay for the night) or as simple stopovers of a route. Every time a change is made on the timeline, the system recalculates availability, route feasibility, interconnections between transport modes, travel time, calculation of CO2 consumed or calories, weather forecast. The user can also indicate what are the preferred means of transport connecting each destination with the following one and he/she may enter specific tags as dog, bike, camper. All the entered information by the user using graphical placeholders, such as icons, graphics, images or texts, will be used by the system to compute a complex query, querying all the different providers associated with planned itinerary in order to retrieve and display availability and prices of the related services.

The goal of the timeline (user interface design) is to make the user's interaction as simple and efficient as possible, in terms of accomplishing user goals. The timeline allows the user to build, optimize, visualize, bookmark also complex route itineraries and to calculate all the services associated to the itinerary without filling in forms and allowing to calculate rates, availability and other information with a single search, booking all in one place with a single transaction.

The present invention can be advantageously implemented through a program for computer comprising program coding means for the implementation of one or more steps of the method, when this program is running on a computer. Therefore, it is understood that the scope of protection is extended to such a program for computer and in addition to a computer readable means having a recorded message therein, said computer readable means comprising program coding means for the implementation of one or more steps of the method, when this program is run on a computer.

By means of the present invention, a number of advantages are achieved.

The system may execute a location identification algorithm to match the received photo to those in the collection to determine the actual location or venue of the photo and match it with reservation process in order to make the photo immediately be planned like a brick in a wall, it can be selected by another user as stages of his itinerary.

Travelers and travel agents pose travel planning queries to computer travel planning systems (TPS) filling forms, such as online travel agencies web sites, carrier-specific web sites, or interfaces supplied by global distribution systems (GDSs) as commonly used by travel agents. The object-oriented travel planner uses UGCs to compute a query instead of text, simplifying the search and pricing of an itinerary. Shared contents become the bricks with which others build their personal experience and the system automatically builds a complex query. Thanks to the object-oriented travel planner every travel experience shared with UGC such as photos or videos finds its place and can be used to plan an itinerary.

Travel boards can be shared, reviewed, voted and lived again by other users even when their origin is different.

Entertainment, inspiration, planning, sharing and fun make of the service a daily or even addictive use.

Users find or express their travel style, browse by tag or interest, follow other users or the places they love.

Each item or service can be purchased singularly or as a part of an itinerary built into a travel board.

Users can plan their trips in one and the same environment even including services not directly sold by the system but the providers of which have affiliation agreement in place with the service: visits / lead to external websites such as TripAdvisor, Booking, AirBnb, Amazon, etc.

Anyone can build any kind of travel experience starting from his own inspiration and in a dynamic and funny way.

The objects-oriented planning system uses mainly user generated and geo tagged content to work properly such as photos and videos. So to work properly there is the need to collect geotagged and well categorized contents manually or automatically.

The manual way considers a user - while snaps and upload a photo - must entering also data such as geographical location, coordinates, altitude, address, type and name of business activity or venues, etc.

If a geographical reference can be automatically detected from the GPS locator embedded in a mobile devices at the time of shooting or retrieved from the information embedded in a photo file, the user who is not sure of his exact location, using his mobile computing device, captures an image (takes a picture either still or video) of his surroundings. He then transmits the image to a remote computer web server dedicated to location detection. The application can suggest to a user the closest venues or location to add to the tag of the photos. Obviously the name of the venues (accommodation, bar or restaurant, attraction, etc.) works as placeholder and the system matches the business name with location and trigger the reservation and/or sale procedure. The simple geotag data may not be sufficient to attribute univocally the business category to a given location and the system could not trigger the e-commerce procedure starting from a photo.

Finally, there may be the case where device does not have GPS capability (or similar technologies that detect locations) or its GPS is inoperative in a given place or the image does not support any geotag reference. In this case if users don't provide these information a computer based location identification using images may fill the gap.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the scope of the invention are deemed to be covered by this invention.

The elements and characteristics described in the various forms of preferred embodiments can be mutually combined without departing from the scope of the invention.

Further implementation details will not be described, as the man skilled in the art is able to carry out the invention starting from the teaching of the above description.

## Claims

1. A method for travel planning, based on object-oriented technology, performed on an electronic system comprising one or more electronic front-end sides, as clients, at least one electronic backend side, as server, one or more storing databases bidirectionally connected to said backend side, comprising the following steps:
- logging in and accessing the electronic system through said frontend side;
- starting communication between said electronic front end side and backend side;
- performing a validation process and creating at least a new User Generated Content (UGC) at said front end side, sending it to said backend side, and storing it in said storing databases;
- through a content manager module, at said backend side, analyzing said User Generated Content (UGC) and assigning a ranking score to said User Generated Content (UGC), creating an object by associating said User Generated Content (UGC) and said scoring , and additional information of geotagging and category, said additional information coming from said frontend side and/or from said storing databases, storing said object in said storing databases;- through a search manager module, at said backend side, searching a number of said objects in said storing databases based on said ranking score, creating a proposed graphic representation of an itinerary with a sequence of said objects, in a given order according to said ranking score, displaying said proposed graphic representation of an itinerary through said frontend,;
- at said one or more electronic front-end sides selecting objects from said proposed graphic representation of an itinerary , and building up a graphic representation of an itinerary of said travel planning according to the selected objects, and sending it to said backend side.

2. A method for travel planning as in claim 1, wherein said proposed graphic representation of an itinerary is created by said search manager module at said backend side with an iterative procedure with said frontend side, depending on the objects selected at each iteration by said front end side.

3. A method for travel planning as in claim 1, wherein said User Generated Content (UGC) comprises still or video images, texts , position of the frontend, imported contents from social networks or from sharing platforms, bookmarking of contents from external websites, URL addresses of external web page, for each User Generated Content (UGC) uploaded, imported or bookmarked, additional information as metadata, tags relative to geographical references or coordinates,

4. A method for travel planning as in claim 1, wherein said assigning a ranking score to said User Generated Content (UGC) takes into account data related to user preferences, user social networks, interacted semantic parameters and calculated metrics stored in said databases or obtained from external sources.

5. A method for travel planning as in claim 1, wherein said content manager module is an asynchronous process launched every time a new object is created, comprising:
- performing semantic analysis of the object, wherein its visual and/or textual content is analyzed to extract keywords relating to the user preferences;
- performing score calculation, for each analyzed object, said ranking score varying according to the object score, and its presence in one or more user's pools, wherein the pool has data structures of type binary search trees (BST) and reflects the relevance to the user's interest, said score calculation taking into account a number of factors, including the time value and/or a time-limit and/or availability, the number of user's interests, categories, user's social network metrics, calculated metrics, the number of social interactions occurred for a given object, each object having a score calculated on the basis of the relevance criteria to the user, so as the same shard may have the same score but it may rank differently depending on the user and the consequent presence of the shard in his pool;
- saving the object in a graph database of said one or more storing databases;
- inserting said object in a full text index, with indexing properties such as title and description, geotagging;
- including the object in a pool of general interests in the graph database;
- including the object in a pool of interest, creating an association object-user for each user;
- including the object in a pool of people followed, updating the corresponding pool for each user;
- including the object in a pool of sites followed, if the object includes geotagging information.

6. A method for travel planning as in claim 5, wherein said search manager module computes an affinity of an object to a given search query, handling a retrieving procedure of the objects from said graph database according one of two main functionalities, depending on whether the search terms entered by the end user through said frontend are present or not in the database:
- if the search terms entered by the end user are present, it queries the full-text index, and the result, as said number of objects is sent to said frontend;
- if the search terms entered by the end user are not present, it sends to the frontend a default stream of objects , made of customized content based on the user preferences.

7. An electronic system for travel planning, based on object-oriented technology, comprising one or more electronic front-end sides, as clients, at least one electronic backend side, as server, one or more storing databases, further comprising a number of software modules adapted to implement the steps of the method according to anyone of the preceding claims.

8. An electronic user device comprising an electronic front-end adapted to perform the frontend part of the method according to anyone of the claims from 1 to 6.

9. Computer program comprising computer program code means adapted to perform all the steps of any claim 1 to 6, when said program is run on a computer.

10. A computer readable medium having a program recorded thereon, said computer readable medium comprising computer program code means adapted to perform all the steps of any claim 1 to 6, when said program is run on a computer.
